# EUROPÄISCHE PATENTSCHRIFT

(11) **EP 2 470 839 B1**
(45) Veröffentlichungstag und Bekanntmachung des Hinweises auf die Patenterteilung: **09.10.2013**
(21) Anmeldenummer: 10742726.2
(22) Anmeldetag: 27.07.2010
(51) Int. Cl.: F24J 2/54

(54) **NACHFÜHREINRICHTUNG**
TRACKING DEVICE
DISPOSITIF DE POURSUITE

(30) Priorität: 29.08.2009 DE 102009039341
(43) Veröffentlichungstag der Anmeldung: 04.07.2012
(73) Patentinhaber: Robert Bosch GmbH, 70469 Stuttgart (DE)
(72) Erfinder: VOGT, Harald, JAKARTA-SELATAN (ID)
(74) Vertreter: Thürer, Andreas
(86) Internationale Anmeldenummer: PCT/EP2010/004579
(87) Internationale Veröffentlichungsnummer: WO 2011/023274

(56) Entgegenhaltungen:
- WO-A1-2007/134752
- DE-A1- 10 022 236
- DE-U1-202007 008 593

## Beschreibung

Die Erfindung betrifft eine Nachführeinrichtung gemäß dem Oberbegriff des Patentanspruchs 1.

Die Druckschrift DE 100 22 236 B4 zeigt eine derartige hydraulisch angetriebene zweiachsige Nachführeinrichtung für ein Solarpanel, bei dem die hydraulisch angetriebenen Aktoren am Kopf eines Mastes montiert sind. Ein Miniatur-Hydraulikaggregat mit einem darin integrierten Tank versorgt die Aktoren mit Hydrauliköl. Im Innern des Mastkopfes ist eine Trägerkonsole für das Solarpanel drehbar um eine senkrechte Azimutachse gelagert. Ein Lagergehäuse ist mit Lageröl gefüllt, das über Dichtungen vom Hydrauliköl getrennt ist.

Nachteilig an derartigen Nachführeinrichtungen ist der Aufwand für die getrennte Schmierung der verschiedenen Wälzlager und der Zahnstange der Azimutverstellung, die in einem oberen Bereich mit Fett und darunter mit einem Ölbad erfolgt, wobei dieses vom Hydrauliköl getrennt ist.

Dem gegenüber liegt der Erfindung die Aufgabe zu Grunde, eine Nachführeinrichtung zu schaffen, bei der der vorrichtungstechnische und der wartungstechnische Aufwand verringert sind.

Diese Aufgabe wird gelöst durch eine Nachführeinrichtung nach Patentanspruch 1.

Die erfindüngsgemäße Nachführeinrichtung für eine auf ein sich bewegendes Objekt auszurichtende Einheit, insbesondere einen Sonnenkollektor, hat eine die Einheit tragenden Konsole, die auf einer mittels eines hydraulischen Azimutantriebs um eine Azimutachse drehbaren Welle aufgenommen ist. Weiterhin hat die Nachführeinrichtung eine hydraulisch verstellbare Neigeeinrichtung zur Neigung der Konsole, wobei eine Lagerung der Welle sowie der Azimutantrieb an oder in einem Gehäuse angeordnet sind. Dabei sind zumindest ein Abschnitt der Welle mit ihrer Lagerung und ein Druckmitteltank mit Druckmittel zur Versorgung des Azimutantriebs und der Neigeeinrichtung gemeinsam in einem Hohlraum des Gehäuses angeordnet. Da das Druckmittel (Hydrauliköl) die Lagerung schmiert, sind der vorrichtungstechnische und der wartungstechnische Aufwand der erfindungsgemäßen Nachführeinrichtung verringert.

Weitere vorteilhafte Ausgestaltungen der Erfindung sind in den abhängigen Patentansprüchen beschrieben.

Bei einer bevorzugten Weiterbildung hat der Azimutantrieb einen im Gehäuse angeordneten Schneckentrieb, dessen Schnecke mit einem an der Welle angeordneten Schneckenrad kämmt, wobei die Schnecke mittels eines Hydromotors angetrieben ist. Da das Druckmittel (Hydrauliköl) den Schneckentrieb schmiert, sind der vorrichtungstechnische und der wartungstechnische Aufwand weiter verringert.

Bei einer bevorzugten Weiterbildung ist der Hydromotor ein an einer Außenwand des Gehäuses befestigter Axialkolbenmotor, dessen hydraulische Anschlüsse an einer dem Gehäuse zugewandten Stirnseite angeordnet sind.

Dabei kann die Schnecke an einer Schneckenachse ausgebildet sein, die beidseitig am Gehäuse zugänglich ist, und an deren ersten Endabschnitt der Hydromotor und an dessen zweiten Endabschnitt ein Drehzahlsensor angeordnet ist. Letzterer ist vorzugsweise ein Potentiometer, mit dem kostengünstig eine hohe Auflösung und eine absolute Winkelangabe erzielt werden können.

Bei einer besonders bevorzugten Weiterbildung hat die Neigeeinrichtung einen an der Konsole angreifenden und an der Welle mittelbar oder unmittelbar angreifenden Hydraulikzylinder, der über eine am Gehäuse angeordnete Hydropumpe mit Druckmittel versorgt werden kann.

Aus Gründen eines kompakten Aufbaus der erfindungsgemäßen Nachführeinrichtung erfolgt neben der Neigeeinrichtung vorzugsweise auch die Versorgung des Azimutantriebes über die Hydropumpe und einen Elektromotor, der die Hydropumpe antreibt.

Dabei kann der Elektromotor ein robuster Synchronmotor und die Hydropumpe eine Zahnradpumpe sein, die beide mit Bezug zur Welle in Radialrichtung an das Gehäuse angesetzt sind.

Um Verrohrungen zu verkürzen oder ganz einzusparen, können ein Tankanschluss und ein Druckanschluss an einer dem Gehäuse zugewandten Seite der Zahnradpumpe angeordnet sein.

Wenn ein seitlicher Wandabschnitt des Gehäuses gleichzeitig eine Wand der Zahnradpumpe bildet, kann eine stirnseitige Wand der Zahnradpumpe entfallen. Wenn dabei der Tankanschluss und der Druckanschluss Durchgangsbohrungen des Wandabschnitts sind, ist diesbezüglich keine Verrohrung nötig.

Eine bevorzugte Weiterbildung hat einen Steuerblock mit einer elektronischen Steuereinheit und/oder Ventilen zur Steuerung der Versorgung des Azimutantriebs und der Neigeeinrichtung.

Die Montage der Konsole auf der Welle ist vereinfacht, wenn die Welle einen Abschnitt hat, der (zur Konsole hin) aus dem Gehäuse auskragt.

Der Steuerblock kann benachbart zum auskragenden Abschnitt der Welle an einer der Konsole zugewandten Oberseite des Gehäuses oder seitlich am Gehäuse oder im Gehäuse angeordnet sein. Letztere Integration bietet besonderen Schutz vor äußeren Einwirkungen.

Um das Druckmittel im Hohlraum des Gehäuses vor Verschmutzung zu schützen wird es bevorzugt, wenn am Gehäuse eine Schmutzdichtung angebracht ist, die an der Welle anliegt.

Um den Hohlraum bzw. das Tankvolumen zu maximieren kann zumindest der im Gehäuse aufgenommene Abschnitt der Welle hohl ausgeführt sein.

Bevorzugt wird eine Lagerung der Welle mit einem Axiallager zur Abstützung der Gewichtskraft der Konsole und der Einheit und mit einem Radiallager, wobei das Axiallager zwischen dem Radiallager und der Konsole angeordnet ist. Beide Lager sind erfindungsgemäß zur Reibungsminimierung in das Druckmittel eingetaucht.

Aus Gründen einer einfachen Fertigung und Montage kann das Gehäuse ein Gussteil sein, durch dessen Oberseite die Welle einsetzbar ist, und an dessen von der Konsole abgewandten Unterseite eine Öffnung angeordnet ist, durch die das Axiallager und das Radiallager einsetzbar sind. Die Öffnung an der Unterseite ist von einem Gehäusedeckel verschließbar. Ein derartiges Gussteil kann vor der Montage spanend bearbeitet, werden, insbesondere für die beiden Lagersitze, für die Schmutzdichtung und für den Anlagebereich des Gehäusedeckels.

Bei einer Weiterbildung trägt die Welle ein Schwenklager der Konsole, wobei die Achse des Schwenklagers in einer Radialebene der Welle liegt.

Im Folgenden wird anhand der Figuren ein Ausführungsbeispiel der Erfindung detailliert beschrieben. Es zeigen:
Figur 1 ein Ausführungsbeispiel einer erfindungsgemäßen Nachführeinrichtung in einer seitlichen Ansicht;
Figur 2 das Ausführungsbeispiel der erfindungsgemäßen Nachführeinrichtung in einem seitlichen Schnitt; und
Figur 3 den Azimutantrieb des Ausführungsbeispiels der erfindungsgemäßen Nachführeinrichtung in einer geschnittenen Draufsicht.

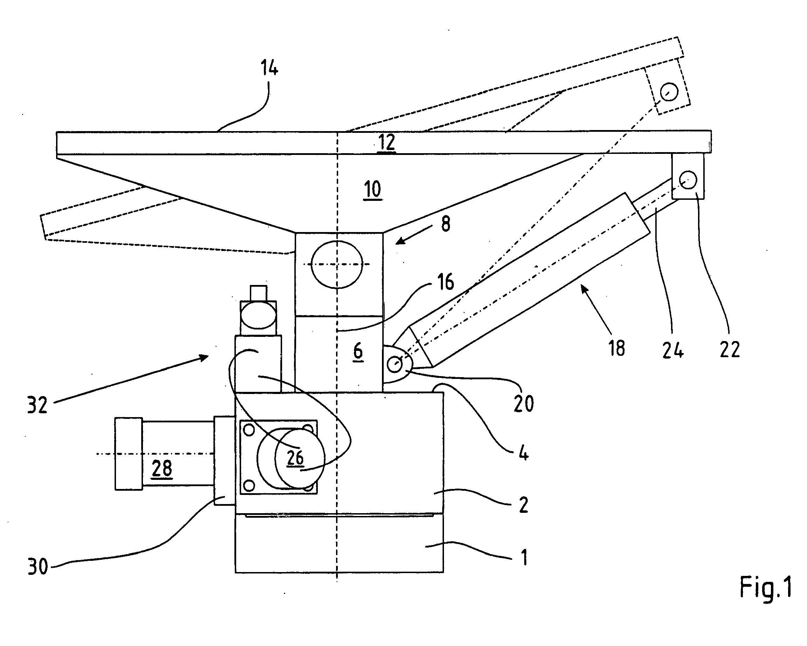

Figur 1 zeigt ein Ausführungsbeispiel einer erfindungsgemäßen Nachführeinrichtung für einen flächigen Sonnenkollektor, bzw. Solar-Panel 12 in einer seitlichen Ansicht. Auf einen Mast 1. von dem in Figur 1 nur der obere Endabschnitt gezeigt ist, ist ein etwa quaderförmiges Gehäuse 2 aufgesetzt. Aus seiner Oberseite 4 kragt eine Welle 6 heraus, an deren oberen Stirnseite ein Schwenklager 8 angeschweißt ist. Über das Schwenklager 8, das eine zur Zeichenebene senkrechte Schwenkachse hat, ist die Welle 6 mit einer Konsole 10 verbunden. An der (Figur 1) oberen Seite der Konsole 10 ist das Solar-Panel 12 befestigt, das mit seiner großflächigen Oberseite 14 senkrecht zur Sonne ausgerichtet und nachgeführt werden soll. Dazu ist die Welle 6 drehbar um eine senkrechte Azimutachse 16 drehbar gelagert, wobei sie bei einer Drehbewegung über das Schwenklager 8 und über die Konsole 10 das Solar-Panel 12 mitnimmt. Durch diese Drehbewegung kann das Solar-Panel 12 einer von Osten nach Westen gerichteten Bewegung der Sonne folgen.

Der vertikalen Bewegungsrichtung der Sonne kann die Nachführeinrichtung dadurch folgen, dass das Solar-Panel 12 um das Schwenklager 8 geneigt wird, und dabei z.B. die in Figur 1 gestrichelt dargestellte Position einnimmt. Für diese Neigungsbewegung ist ein Hydrozylinder 18 vorgesehen, der einerseits über ein Gelenk 20 schwenkbar an der Welle 6 und andererseits über ein Gelenk 22 an einem Randabschnitt der Konsole 10 oder des Solar-Panels 12 angelenkt ist. Über ein Einziehen einer Kolbenstange 24 kann der Randabschnitt abgesenkt werden, während über ein Ausfahren der Kolbenstange 24 der Randabschnitt (z.B. in die in Figur 1 gezeigte Position) angehoben werden kann.

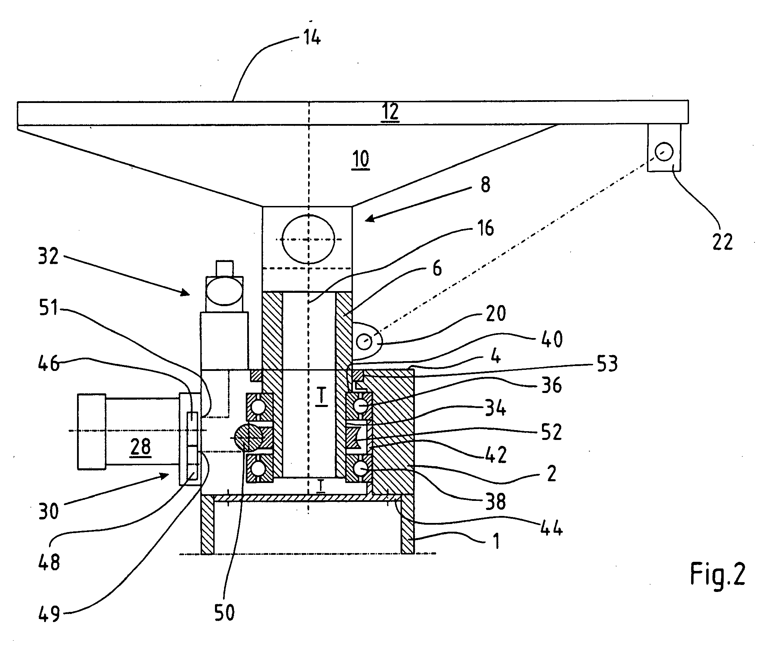

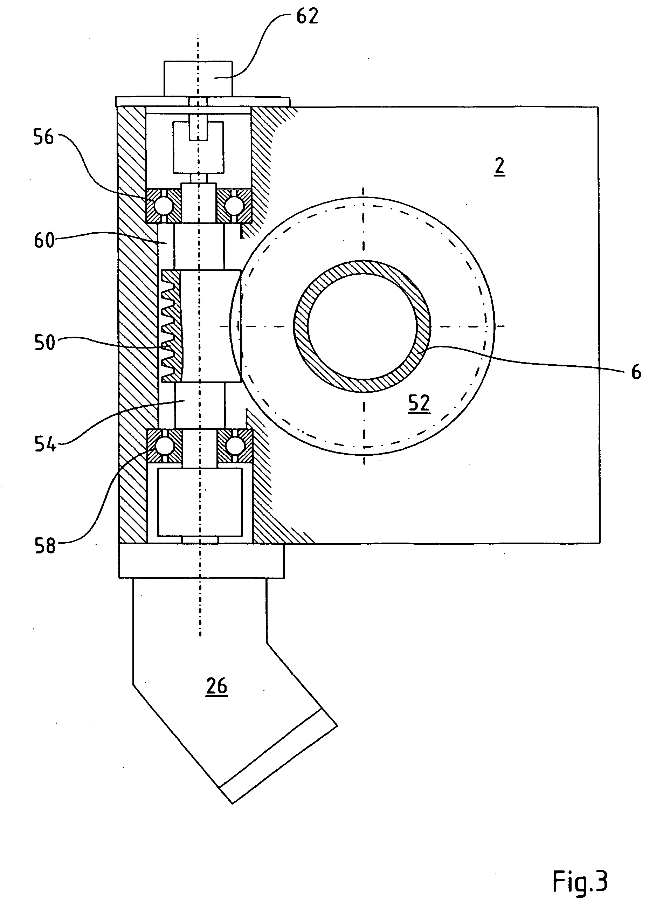

Die Drehung der Welle 6 um die Azimutachse 16 erfolgt mittels eines Hydromotors 26 und eines mit Bezug zu den Figuren 2 und 3 erläuterten Azimutantriebs.

Beide hydraulische Aktoren 18, 26 werden über eine von einem Synchronmotor 28 angetriebene Zahnradpumpe 30 mit Druckmittel versorgt. Weiterhin ist an der Oberseite 4 des Gehäuses 2 ein Steuerblock 32 angeordnet, der eine elektronische Steuereinheit und Ventile zur Steuerung und Druckmittelversorgung der beiden Aktoren 18, 26 hat.

Figur 2 zeigt das Ausführungsbeispiel gemäß Figur 1 in einem seitlichen Schnitt. Die Welle 6 ist als Hohlwelle ausgeführt und hat einen an einer Stufe 40 radial zurückgestuften Umfangsabschnitt 34, an dem ein Axiallager 36 und ein Radiallager 38 angeordnet sind. Über diese beiden Lager 36, 38 ist die Welle 6 und damit das Solar-Panel 12 um die Azimutachse drehbar gelagert, wobei die Welle 6 über ihre Stufe 40, das Axiallager 36, eine Hülse 42, einen äußeren Lagerring des Radiallagers 38 und über einen Gehäusedeckel 44 entlang der Azimutachse 16 gegenüber dem Gehäuse 2 abgestützt ist. Der Gehäusedeckel 44 ist über Schrauben an einer Unterseite des Gehäuses 2 befestigt und abgedichtet.

Im innern des Gehäuses 2 und im Innern der Welle 6 ist ein Hohlraum geschaffen, der als Tank T der Nachführeinrichtung dient. Das darin aufgenommene Hydrauliköl wird von Zahnrädern 46, 48 der Zahnradpumpe 30 über einen Tankanschluss 49 angesaugt und über eine Druckanschluss 51 und über Ventile des Steuerblocks 32 zum Hydrozylinder 18 und/oder zum Hydromotor 26 (beide in Figur 2 nicht gezeigt) gefördert.

In eine umlaufende Ausnehmung an der Oberseite 4 des Gehäuses 2 ist eine ringförmig Schmutzdichtung 53 eingesetzt, die an der Welle 6 anliegt und das Druckmittel im Tank T vor Verschmutzung schützt.

Der Hydromotor 26 treibt eine Schnecke 50 an, die über ein Schneckenrad 52 die damit befestigte Welle 6 in Rotation versetzt. Dabei ist das Schneckenrad 52 zwischen den beiden Lagern 36, 38 am Umfangsabschnitt 34 der Welle 6 befestigt.

Figur 3 zeigt den Azimutantrieb des Ausführungsbeispiels gemäß Figur 1 und Figur 2 in einer geschnittenen Draufsicht. Die hohl ausgeführte Welle 6 wird vom Hydromotor 26 über eine Schneckenachse 54, die daran befestigte Schnecke 50 und das damit kämmende Schneckenrad 52 angetrieben. Die Schneckenachse 54 ist über zwei Wälzlager 56, 58 in einer Durchgangsausnehmung 60 des Gehäuses 2 gelagert. Dabei ist die Schneckenachse 54 im Bereich der Lager 56, 58 radial zurückgestuft, während die Durchgangsausnehmung 60 im Bereich der Lager 56, 58 radial erweitert ist. Damit sind die Wälzlager 56, 58 während der Montage der erfindungsgemäßen Nachführeinrichtung jeweils von außen (in Figur 3 von oben und von unten) in die Durchgangsausnehmung 60 des Gehäuses 2 einsetzbar. An einer Seite (in Figur 2 unten) ist die Durchgangsausnehmung 60 vom Hydromotor 26 verschlossen, während an der anderen (in Figur 3 oberen) Seite der Durchgangsausnehmung 60 ein Potentiometer 62 angeordnet ist, der als Drehzahlsensor bzw. Drehpositionsgeber für die Schneckenachse 54, die Schnecke 50 und den Hydromotor 26 dient.

Offenbart ist eine Nachführeinrichtung für eine auf ein sich bewegendes Objekt auszurichtende Einheit, insbesondere einen Sonnenkollektor, die eine die Einheit tragenden Konsole hat, die auf einer mittels eines hydraulischen Azimutantriebs um eine Azimutachse drehbaren Welle aufgenommen ist. Weiterhin hat die Nachführeinrichtung eine hydraulisch verstellbare Neigeeinrichtung zur Neigung der Konsole, wobei eine Lagerung der Welle sowie der Azimutantrieb an oder in einem Gehäuse angeordnet sind. Dabei sind zumindest ein Abschnitt der Welle mit ihrer Lagerung, der Azimutantrieb und ein Druckmitteltank mit Druckmittel zur Versorgung des Azimutantriebs und der Neigeeinrichtung in einem gemeinsamen Hohlraum des Gehäuses angeordnet.

### Bezugszeichenliste

- 1: Mast
- 2: Gehäuse
- 4: Oberseite
- 6: Welle
- 8: Schwenklager
- 10: Konsole
- 12: Solar-Panel
- 14: Oberseite
- 16: Azimutachse
- 18: Hydrozylinder
- 20, 22: Gelenk
- 24: Kolbenstange
- 26: Hydromotor
- 28: Synchronmotor
- 30: Zahnradpumpe
- 32: Steuerblock
- 34: Umfangsabschnitt
- 36: Axiallager
- 38: Radiallager
- 40: Stufe
- 42: Hülse
- 44: Gehäusedeckel
- 46, 48: Zahnradrad
- 49: Tankanschluss
- 50: Schnecke
- 51: Druckanschluss
- 52: Schneckenrad
- 53: Schmutzdichtung
- 54: Schneckenachse
- 56, 58: Wälzlager
- 60: Durchgangsausnehmung
- 62: Potentiometer

- T: Tank

## Patentansprüche

1. Nachführeinrichtung für eine auf ein sich bewegendes Objekt auszurichtende Einheit (12), insbesondere einen Sonnenkollektor (12), mit einer die Einheit (12) tragenden Konsole (10), die auf einer mittels eines hydraulischen Azimutantriebs (26, 50, 52, 54) um eine Azimutachse (16) drehbaren Welle (6) aufgenommen ist, und mit einer hydraulisch verstellbaren Neigeeinrichtung (8, 18) zur Neigung der Konsole (10), wobei eine Lagerung (36, 38) der Welle (6) sowie der Azimutantrieb (26, 50, 52, 54) an oder in einem Gehäuse (2) angeordnet sind,
wobei ein Abschnitt der Welle (6) und ihre Lagerung (36, 38) in einem Hohlraum (T) des Gehäuses (2) angeordnet sind,
**dadurch gekennzeichnet, dass** ein Druckmitteltank (T) mit Druckmittel zur Versorgung des Azimutantriebs (26, 50, 52, 54) und der Neigeeinrichtung (8, 18) in dem Hohlraum (T) angeordnet ist, wobei aufgrund der gemeinsamen Anordnung des Druckmitteltanks (T) und der Lagerung (36, 38) in dem Hohlraum (T) das Druckmittel die Lagerung (36, 38) schmiert.

2. Nachführeinrichtung nach Patentanspruch 1, wobei der Azimutantrieb (26, 50, 52, 54) einen im Gehäuse (2) angeordneten Schneckentrieb (50, 52) hat, dessen Schnecke (50) mit einem an der Welle (6) angeordneten Schneckenrad (52) kämmt, wobei die Schnecke (50) mittels eines Hydromotors (26) angetrieben ist.

3. Nachführeinrichtung nach Patentanspruch 2, wobei der Hydromotor (26) ein an einer Außenwand des Gehäuses (2) befestigter Axialkolbenmotor (26) ist, dessen hydraulische Anschlüsse an einer dem Gehäuse (2) zugewandten Stirnseite angeordnet sind.

4. Nachführeinrichtung nach Patentanspruch 2 oder 3, wobei die Schnecke (50) an einer Schneckenachse (54) ausgebildet ist, die beidseitig am Gehäuse (2) zugänglich ist, und an deren ersten Endabschnitt der Hydromotor (26) und an dessen zweiten Endabschnitt ein Drehzahlsensor (62), insbesondere ein Potentiometer (62), angeordnet sind.

5. Nachführeinrichtung nach einem der vorhergehenden Patentansprüche, wobei die Neigeeinrichtung (8, 18) einen an der Konsole (10) angreifenden und an der Welle (6) mittelbar oder unmittelbar angreifenden Hydraulikzylinder (18) hat, der über eine am Gehäuse (2) angeordnete Hydropumpe (30) mit Druckmittel versorgbar ist.

6. Nachführeinrichtung nach Patentanspruch 5, wobei die Versorgung des Azimutantriebs (26, 50, 52, 54) über die Hydropumpe (30) und einen Elektromotor (28) erfolgt, der die Hydropumpe (30) antreibt.

7. Nachführeinrichtung nach Patentanspruch 6, wobei der Elektromotor (28) ein Synchronmotor (28) und die Hydropumpe (30) eine Zahnradpumpe (30) ist, die beide mit Bezug zur Welle (6) in Radialrichtung an das Gehäuse (2) angesetzt sind.

8. Nachführeinrichtung nach Patentanspruch 7, wobei ein Tankanschluss (49) und ein Druckanschluss (51) an einer dem Gehäuse (2) zugewandten Seite der Zahnradpumpe (30) angeordnet sind.

9. Nachführeinrichtung nach Patentanspruch 8, wobei ein seitlicher Wandabschnitt des Gehäuses (2) eine Wand der Zahnradpumpe (30) bildet, und wobei der Tankanschluss (49) und der Druckanschluss (51) Durchgangsbohrungen des Wandabschnitts sind.

10. Nachführeinrichtung nach einem der vorhergehenden Patentansprüche mit einem Steuerblock (32) mit einer elektronischen Steuereinheit und/oder Ventilen zur Steuerung der Versorgung des Azimutantriebs (26, 50, 52, 54) und der Neigeeinrichtung (8, 18).

11. Nachführeinrichtung nach einem der vorhergehenden Patentansprüche, wobei die Welle (6) einen Abschnitt hat, der zur Konsole (10) hin aus dem Gehäuse (2) auskragt.

12. Nachführeinrichtung zumindest nach den Patentansprüchen 10 und 11, wobei der Steuerblock (32) benachbart zum auskragenden Abschnitt der Welle (6) can einer der Konsole (10) zugewandten Oberseite (4) des Gehäuses (2) oder seitlich am Gehäuse (2) oder im Gehäuse (2) angeordnet ist.

13. Nachführeinrichtung nach einem der vorhergehenden Patentansprüche, wobei am Gehäuse (2) eine Schmutzdichtung (53) angebracht ist, die an der Welle (6) anliegt.

14. Nachführeinrichtung nach einem der vorhergehenden Patentansprüche, wobei zumindest der im Gehäuse (2) aufgenommene Abschnitt der Welle (6) hohl ist.

15. Nachführeinrichtung nach einem der vorhergehenden Patentansprüche, wobei die Lagerung (36, 38) der Welle (6) ein Axiallager (36) und ein Radiallager (38) hat, wobei das Axiallager (36) zwischen dem Radiallager (38) und der Konsole (10) angeordnet ist, und wobei beide Lager (36, 38) in das Druckmittel eingetaucht sind.

16. Nachführeinrichtung nach Patentanspruch 15, wobei das Gehäuse (2) ein Gussteil (2) ist, durch dessen Oberseite (4) die Welle (6) einsetzbar ist, und an dessen von der Konsole (10) abgewandten Unterseite eine Öffnung angeordnet ist, durch die das Axiallager (36) und das Radiallager (38) einsetzbar sind, und die von einem Gehäusedeckel (44) verschließbar ist.

17. Nachführeinrichtung nach einem der vorhergehenden Patentansprüche, wobei die Welle (6) ein Schwenklager (8) der Konsole (10) trägt, und wobei die Achse des Schwenklagers (8) in einer Radialebene der Welle (6) liegt.

## Claims

1. Tracking device for a unit (12) which is to be oriented with respect to a moving object, in particular a solar collector (12), having a bracket (10) which supports the unit (12) and which is received on a shaft (6) which can be rotated about an azimuth axis (16) by means of a hydraulic azimuth drive (26, 50, 52, 54), and having a hydraulically adjustable tilting device (8, 18) for tilting the bracket (10), wherein a bearing arrangement (36, 38) of the shaft (6) and the azimuth drive (26, 50, 52, 54) are arranged on or in a housing (2),
wherein a portion of the shaft (6) and the bearing arrangement (36, 38) thereof are arranged in a cavity (T) of the housing (2),
**characterized in that** a pressure medium tank (T) with pressure medium for supply to the azimuth drive (26, 50, 52, 54) and to the tilting device (8, 18) is arranged in the cavity (T), wherein, owing to the common arrangement of the pressure medium tank (T) and of the bearing arrangement (36, 38) in the cavity (T), the pressure medium lubricates the bearing arrangement (36, 38).

2. Tracking device according to Patent Claim 1, wherein the azimuth drive (26, 50, 52, 54) has a worm drive (50, 52) which is arranged in the housing (2) and whose worm (50) meshes with a worm gear (52) arranged on the shaft (6), wherein the worm (50) is driven by means of a hydraulic motor (26).

3. Tracking device according to Patent Claim 2, wherein the hydraulic motor (26) is an axial piston motor (26) which is fastened to an outer wall of the housing (2) and whose hydraulic ports are arranged on an end side facing toward the housing (2).

4. Tracking device according to Patent Claim 2 or 3, wherein the worm (50) is formed on a worm shaft (54) which is accessible from both sides of the housing (2), on the first end portion of which worm shaft the hydraulic motor (26) is arranged, and on the second end portion of which worm shaft a rotational speed sensor (62), in particular a potentiometer (62), is arranged.

5. Tracking device according to one of the preceding patent claims, wherein the tilting device (8, 18) has a hydraulic cylinder (18) which engages on the bracket (10) and which engages indirectly or directly on the shaft (6) and which can be supplied with pressure medium by means of a hydraulic pump (30) arranged on the housing (2).

6. Tracking device according to Patent Claim 5, wherein the supply to the azimuth drive (26, 50, 52, 54) is realized by means of the hydraulic pump (30) and an electric motor (28) which drives the hydraulic pump (30).

7. Tracking device according to Patent Claim 6, wherein the electric motor (28) is a synchronous motor (28) and the hydraulic pump (30) is a gearwheel pump (30), both the synchronous motor and the gearwheel pump being mounted on the housing (2) in the radial direction with respect to the shaft (6).

8. Tracking device according to Patent Claim 7, wherein a tank port (49) and a pressure port (51) are arranged on a side, which faces toward the housing (2), of the gearwheel pump (30).

9. Tracking device according to Patent Claim 8, wherein a side wall portion of the housing (2) forms a wall of the gearwheel pump (30), and wherein the tank port (49) and the pressure port (51) are through bores in the wall portion.

10. Tracking device according to one of the preceding patent claims, having a control block (32) with an electronic control unit and/or valves for controlling the supply to the azimuth drive (26, 50, 52, 54) and to the tilting device (8, 18).

11. Tracking device according to one of the preceding patent claims, wherein the shaft (6) has a portion which projects out of the housing (2) toward the bracket (10).

12. Tracking device at least according to Patent Claims 10 and 11, wherein the control block (32) is arranged, adjacent to the projecting portion of the shaft (6), on a top side (4), which faces toward the bracket (10), of the housing (2) or on the side of the housing (2) or in the housing (2).

13. Tracking device according to one of the preceding patent claims, wherein a dirt seal (53) is mounted on the housing (2), which dirt seal bears against the shaft (6).

14. Tracking device according to one of the preceding patent claims, wherein at least that portion of the shaft (6) which is received in the housing (2) is hollow.

15. Tracking device according to one of the preceding patent claims, wherein the bearing arrangement (36, 38) of the shaft (6) has an axial bearing (36) and a radial bearing (38), wherein the axial bearing (36) is arranged between the radial bearing (38) and the bracket (10), and wherein both bearings (36, 38) are immersed in the pressure medium.

16. Tracking device according to Patent Claim 15, wherein the housing (2) is a cast part (2), through the top side (4) of which the shaft (6) can be inserted, and on the underside, which faces away from the bracket (10), of which there is arranged an opening through which the axial bearing (36) and the radial bearing (38) can be inserted and which can be closed off by a housing cover (44).

17. Tracking device according to one of the preceding patent claims, wherein the shaft (6) supports a pivot bearing (8) of the bracket (10), and wherein the axis of the pivot bearing (8) lies in a radial plane of the shaft (6).

## Revendications

1. Dispositif de poursuite pour une unité (12) devant être orientée vers un objet mobile, en particulier un collecteur solaire (12), comprenant une console (10) portant l'unité (12), laquelle console est reçue sur un arbre (6) pouvant tourner autour d'un axe azimutal (16) au moyen d'un entraînement hydraulique azimutal (26, 50, 52, 54), et comprenant un dispositif d'inclinaison (8, 18) réglable hydrauliquement pour l'inclinaison de la console (10), un support sur palier (36, 38) de l'arbre (6) ainsi que l'entraînement azimutal (26, 50, 52, 54) étant disposés sur ou dans un boîtier (2),
une portion de l'arbre (6) et son support sur palier (36, 38) étant disposés dans une cavité (T) du boîtier (2),
**caractérisé en ce qu'**un réservoir de fluide sous pression (T) comprenant du fluide sous pression pour l'alimentation de l'entraînement azimutal (26, 50, 52, 54) et du dispositif d'inclinaison (8, 18) est disposé dans la cavité (T), le fluide sous pression lubrifiant le support sur palier (36, 38) du fait de l'agencement commun du réservoir de fluide sous pression (T) et du support sur palier (36, 38) dans la cavité (T).

2. Dispositif de poursuite selon la revendication 1, dans lequel l'entraînement azimutal (26, 50, 52, 54) présente un entraînement à vis sans fin (50, 52) disposé dans le boîtier (2), dont la vis sans fin (50) s'engrène avec une roue à denture hélicoïdale (52) disposée sur l'arbre (6), la vis sans fin (50) étant entraînée au moyen d'un moteur hydraulique (26).

3. Dispositif de poursuite selon la revendication 2, dans lequel le moteur hydraulique (26) est un moteur à piston axial (26) fixé sur une paroi extérieure du boîtier (2), dont les raccords hydrauliques sont disposés sur un côté frontal tourné vers le boîtier (2).

4. Dispositif de poursuite selon la revendication 2 ou 3, dans lequel la vis sans fin (50) est réalisée sur un axe de vis sans fin (54) qui est accessible des deux côtés au niveau du boîtier (2), et sur la première portion d'extrémité de laquelle est disposé le moteur hydraulique (26), et sur la deuxième portion d'extrémité de laquelle est disposé un capteur de vitesse de rotation (62), en particulier un potentiomètre (62).

5. Dispositif de poursuite selon l'une quelconque des revendications précédentes, dans lequel le dispositif d'inclinaison (8, 18) présente un vérin hydraulique (18) s'engageant sur la console (10) et s'engageant directement ou indirectement sur l'arbre (6), lequel vérin hydraulique peut être alimenté en fluide sous pression par le biais d'une pompe hydraulique (30) disposée sur le boîtier (2).

6. Dispositif de poursuite selon la revendication 5, dans lequel l'alimentation de l'entraînement azimutal (26, 50, 52, 54) s'effectue par le biais de la pompe hydraulique (30) et d'un moteur électrique (28), qui entraîne la pompe hydraulique (30).

7. Dispositif de poursuite selon la revendication 6, dans lequel le moteur électrique (28) est un moteur synchrone (28) et la pompe hydraulique (30) est une pompe à engrenage (30), tous deux étant disposés par rapport à l'arbre (6) dans la direction radiale sur le boîtier (2).

8. Dispositif de poursuite selon la revendication 7, dans lequel un raccord de réservoir (49) et un raccord de pression (51) sont disposés sur un côté de la pompe à engrenage (30) tourné vers le boîtier (2).

9. Dispositif de poursuite selon la revendication 8, dans lequel une portion de paroi latérale du boîtier (2) forme une paroi de la pompe à engrenage (30), et le raccord de réservoir (49) et le raccord de pression (51) sont des orifices de passage de la portion de paroi.

10. Dispositif de poursuite selon l'une quelconque des revendications précédentes, comprenant un bloc de commande (32) avec une unité de commande électronique et/ou des soupapes de commande de l'alimentation de l'entraînement azimutal (26, 50, 52, 54) et du dispositif d'inclinaison (8, 18).

11. Dispositif de poursuite selon l'une quelconque des revendications précédentes, dans lequel l'arbre (6) présente une portion qui fait saillie hors du boîtier (2) en direction de la console (10).

12. Dispositif de poursuite selon au moins les revendications 10 et 11, dans lequel le bloc de commande (32) est disposé à proximité de la portion en saillie de l'arbre (6) sur un côté supérieur (4) du boîtier (2) tourné vers la console (10) ou latéralement sur le boîtier (2) ou dans le boîtier (2).

13. Dispositif de poursuite selon l'une quelconque des revendications précédentes, dans lequel un joint antipoussière (53) est monté sur le boîtier (2), et s'applique sur l'arbre (6).

14. Dispositif de poursuite selon l'une quelconque des revendications précédentes, dans lequel au moins la portion de l'arbre (6) reçue dans le boîtier (2) est creuse.

15. Dispositif de poursuite selon l'une quelconque des revendications précédentes, dans lequel le support sur palier (36, 38) de l'arbre (6) présente un palier axial (36) et un palier radial (38), le palier axial (36) étant disposé entre le palier radial (38) et la console (10), et dans lequel les deux paliers (36, 38) sont immergés dans le fluide sous pression.

16. Dispositif de poursuite selon la revendication 15, dans lequel le boîtier (2) est une pièce coulée (2), à travers le côté supérieur (4) de laquelle peut être inséré l'arbre (6), et au niveau du côté inférieur opposé à la console (10) de laquelle est disposée une ouverture à travers laquelle le palier axial (36) et le palier radial (38) peuvent être insérés, et qui peut être fermée par un couvercle de boîtier (44).

17. Dispositif de poursuite selon l'une quelconque des revendications précédentes, dans lequel l'arbre (6) porte un palier pivotant (8) de la console (10), et dans lequel l'axe du palier pivotant (8) est situé dans un plan radial de l'arbre (6).
